# EUROPÄISCHE PATENTSCHRIFT

(11) **EP 1 456 072 B1**
(45) Veröffentlichungstag und Bekanntmachung des Hinweises auf die Patenterteilung: **10.08.2005**
(21) Anmeldenummer: 02782848.2
(22) Anmeldetag: 08.10.2002
(51) Int. Cl.: B61K 11/00, B61C 17/02, B60K 15/035

(54) **ANORDNUNG ZUM BETANKEN VON FAHRZEUGEN, INSBESONDERE VON SCHIENENFAHRZEUGEN**
SYSTEM FOR REFUELING VEHICLES, PARTICULARLY RAIL VEHICLES
SYSTEME POUR RAVITAILLER EN CARBURANT DES VEHICULES, NOTAMMENT DES VEHICULES SUR RAILS

(30) Priorität: 18.12.2001 DE 10162212
(43) Veröffentlichungstag der Anmeldung: 15.09.2004
(73) Patentinhaber: DB Energie, 60326 Frankfurt am Main (DE)
(72) Erfinder: HAJEK, Winfried, (DE); NABERT, Bernd, 64404 Bickenbach (DE)
(74) Vertreter: Zinken-Sommer, Rainer
(86) Internationale Anmeldenummer: PCT/EP2002/011230
(87) Internationale Veröffentlichungsnummer: WO 2003/051699

(56) Entgegenhaltungen:
- DE-A- 3 019 300
- US-A- 2 869 594
- US-A- 2 901 008
- US-A- 3 032 079
- US-A- 5 873 498

## Beschreibung

Die Erfindung betrifft eine Anordnung zum Betanken von Fahrzeugen, insbesondere von Schienenfahrzeugen. Sie dient dazu, eine Betankung von Fahrzeugen, insbesondere Schienenfahrzeugen, auch außerhalb von ortsfesten Tankstellen zu ermöglichen. Darüber hinaus dient die Erfindung dazu, den Umfang für den bautechnischen Gewässerschutz an Tankstellen bei zusätzlichem Sicherheitsgewinn wesentlich zu reduzieren.

Das Betanken von Schienenfahrzeugen erfolgt derzeit nach allgemein anerkannten sowie üblichen Regeln der Technik. Von herausragender Bedeutung ist dabei, dass sowohl für das Errichten wie auch für das Betreiben von Tankanlagen besondere bundes- und länderrechtliche Bestimmungen zwingend einzuhalten sind. Vorrangig sind dies die gesetzlichen Forderungen des Wasserhaushaltsgesetzes (WHG), die Technischen Regeln für den Umgang mit brennbaren Flüssigkeiten (TRbF) und die Technischen Regeln für den Umgang mit wassergefärdenden Stoffen (TRwS). Nach dem WHG gilt der allgemeine Sorgfaltsgrundsatz, der besagt, dass jedermann verpflichtet ist, bei Maßnahmen, mit denen Einwirkungen auf Gewässer verbunden sein können, die nach den Umständen erforderliche Sorgfalt anzuwenden, um eine Verunreinigung des Wassers oder eine sonstige nachteilige Veränderung seiner Eigenschaften zu verhüten.

Das Betanken von Schienenfahrzeugen darf nach den geltenden gesetzlichen Bestimmungen derzeit nur an den dafür vorgesehenen Tankstellen erfolgen. Dies sind Anlagen, die zum Lagern, Abfüllen und Umschlagen wassergefährdender Stoffe im Bereich der gewerblichen Wirtschaft und im Bereich öffentlicher Einrichtungen geeignet sind. Nach dem Besorgnisgrundsatz des WHG sind diese so beschaffen, dass eine Verunreinigung der Gewässer oder sonstiger nachteiliger Eigenschaften nicht zu befürchten ist.

Um Gefährdungen durch austretende Kraftstoffe zu vermeiden, sind die Tankstellen im Netz der Deutschen Bahn AG mit folgenden Sicherheitseinrichtungen ausgerüstet.

Die Tankstellen verfügen über eine Notabschaltung an den Abgabeeinrichtungen (Not-Stop) und über eine Lecküberwachung. Es existiert eine Abfüllsicherung für die Fahrzeugbetankung, die das Abfüllen nur bis zum maximal zulässigen Füllstand von 90 % des Fahrzeugtankvolumens zulässt. Hinter dem Zapfautomaten befindet sich ein manuell zu betätigender Kugelhahn. Die umgebende Fläche im Wirkbereich der Schlauchleitung ist durch bautechnische Maßnahmen flüssigkeitsdicht ausgeführt und wird über eine Abscheideranlage (Leichtflüssigkeitsabscheider) entwässert. Es existieren akustische und optische Störmelder für die Abscheideranlage.

Das Befüllen der Schienenfahrzeuge darf zur Gewährleistung der aufgeführten Sicherheitsmaßnahmen ausschließlich nur an den dafür vorgesehenen Tankstellen erfolgen. Die Bedienung der Tankstellen erfolgt dabei regelmäßig durch das Triebfahrzeugpersonal in Selbstbedienung.

Das Abfüllen des Kraftstoffes erfolgt in einem offenen System. Das bedeutet, der Kraftstoff fließt über das in den Einfüllstutzen des Fahrzeugtanks gesteckte Zapfventil in freiem Einlauf. Dabei kann es, je nach der Form des Einfüllstutzens und in Abhängigkeit von der Stärke des Volumenstromes, zum Verspritzen des Kraftstoffes beim Füllen und zu Leckagen beim Entnehmen des Zapfventils kommen. Austretende Leckagen werden mittels des flüssigkeitsdicht umbauten Wirkbereiches über die Abscheideranlage aufgefangen und müssen kostenintensiv entsorgt werden.

Zur Reduzierung von solcherart Leckagen wurde damit begonnen, für die Verbindung der Schlauchleitung an den Einfüllstutzen des Fahrzeuges geschlossene Systeme zu verwenden. Solcherart geschlossene Systeme sind durch sogenannte Vollschlauchtrockenkupplungen gekennzeichnet, die eine völlig leckagefreie Verbindung ermöglichen (die US-A-5,873,498 offenbart eine mobile Anordnung zum Betanken von Lokomotiven). Die Vollschlauchtrockenkupplungen verfügen dazu über ein sogenanntes Vaterteil am Einfüllstutzen des Fahrzeuges sowie über ein Mutterteil an der Schlauchleitung. Die Besonderheit der Vollschlauchtrockenkupplung besteht darin, dass ein Durchfluss und somit eine Öffnung erst durch das Ineinanderdrehen zwischen dem Vater- und dem Mutterteil freigegeben wird. Umgekehrt ist der Durchfluss beidseitig gesperrt, sobald die Verbindung durch Zurückdrehen und Trennung zwischen Vater- und Mutterteil unterbrochen wird, und die Kupplungshälften dabei selbsttätig schließen.

Ein wesentlicher Nachteil bei der Durchführung von Betankungsvorgängen auf der Basis der derzeitig verfügbaren Anlagentechnik - auch bei geschlossenen Tanksystemen infolge der Verwendung von Volischlauchtrockenkupplungen - besteht darin, dass zur vollständigen Gewährleistung aller Sicherheitsanforderungen ein Betanken grundsätzlich nur an den dafür vorgesehenen fest installierten Tankstellen möglich ist. Dies hat unter Umständen erhebliche Nachteile für den Betriebsablauf des Eisenbahnverkehrs zur Folge. Etwa, wenn Triebfahrzeuge für Betankungszwecke längere Anfahrten bis zum Aufstellort der Tankstelle zurücklegen müssen. Dafür sind naturgemäß Leerfahrten einzuplanen, die nicht für produktive Zwecke genutzt werden können. In besonderer Weise trifft dies auch auf Triebfahrzeuge im Rangierverkehr zu, sowie auf Fahrzeuge in Baustellenbereichen, die sich oftmals in größerer Entfernung zur nächstliegenden Tankstelle im Einsatz befinden. Mit einer Verwendung von mobilen Tankeinrichtungen könnte dieses Problem nachhaltig gelöst werden. Dem steht jedoch bei dem derzeitigen technischen Ausrüstungsstand die Nichterfüllbarkeit der dargestellten gesetzlichen Forderungen und damit deren Unzulässigkeit entgegen.

Der Erfindung liegt daher die Aufgabe zugrunde, eine Anordnung zum Betanken von Fahrzeugen, insbesondere von Schienenfahrzeugen, zu schaffen, die den Aufwand für einen baulichen Gewässerschutz bei verbesserter Sicherheit reduziert, und mit der ein Betanken auch außerhalb von Tankstellen ermöglicht wird.

Diese Aufgabe wird in Verbindung mit dem Oberbegriff des Hauptanspruches erfindungsgemäß gelöst, indem die Tankeinrichtung eine Kombination aus einer Vollschlauchtrockenkupplung mit einer doppelwandigen Schlauchleitung aufweist, wobei sich eine Kupplungshälfte, insbesondere ein Vaterteil der Vollschlauchtrockenkupplung, am Einfüllstutzen des Fahrzeugtanks befindet, und eine zweite Kupplungshälfte, insbesondere ein Mutterteil, am Abschluss der doppelwandigen Schlauchleitung, wobei die doppelwandige Schlauchleitung eine Verbindung von der Vollschlauchtrockenkupplung bis zum Ausgang eines schnell schließenden Ventils innerhalb der Tankeinrichtung herstellt, wobei das schnell schließende Ventil ansteuerungsseitig mit einem Leckanzeigegerät verbunden ist, und das Leckanzeigegerät druckseitig mit dem Zwischenraum der doppelwandigen Schlauchleitung in Verbindung steht und von diesem steuerungsseitig beaufschlagt ist.

Eine vorteilhafte Ausgestaltung der Erfindung ist in den Patentansprüchen 2 und 3 angegeben und besteht darin, dass die Tankeinrichtung mit den erfindungsgemäßen Merkmalen sowohl ortfest in Tankstellen als auch als mobile Tankeinrichtung auf Straßen- oder schienengebundenen Tankfahrzeugen installiert sein kann.

Der besondere Vorteil der Erfindung besteht darin, dass Leckagen - wie an bisherigen Anlagen üblich - nicht erst aufgefangen und sodann aufwändig entsorgt werden müssen, wobei das Rückhaltevolumen stets so bemessen sein muss, dass ein maximal auftretendes Leckagevolumen aufgefangen werden kann, sondern, dass ein Austreten von gefährdenden Flüssigkeiten schon am Entstehungsort verhindert wird. Die Funktion des bautechnischen Gewässerschutzes, der den Wirkbereich bisheriger Tankeinrichtungen räumlich umgibt, übernimmt bei der erfindungsgemäßen Anordnung wirkungsvoll die an sich bekannte doppelwandige Ausführung der Schlauchleitung. Deren Funktion beruht darauf, dass infolge von - wie auch immer gearteten - Beschädigungen an der Innen- oder an der Außenwand der doppelwandigen Schlauchleitung, und selbst bei einer kompletten Durchtrennung der doppelwandigen Schlauchleitung, eine sofortige Änderung des Druckniveaus in ihrem Zwischenraum stattfindet, worauf das daran angeschlossene Leckanzeigegerät unmittelbar reagiert und den weiteren Zulauf von Kraftstoff durch Sperren des schnell schließenden Ventils unterbindet. Das Überfüllen eines Fahrzeugtankes wird, wie auch schon bisher üblich, durch einen im Fahrzeugtank befindlichen Grenzwertgeber, der über eine Leitung und Steckverbinder mit einer Abschaltautomatik an der Tankeinrichtung verbunden ist, verhindert. Gegenüber den bisher verwendeten offenen Systemen besteht infolge der Verwendung einer Vollschlauchtrockenkupplung jedoch zusätzliche Sicherheit gegenüber herausspritzenden Kraftstoffmengen und Leckagen beim Verbinden und Trennen der Schlauchleitung zum und vom Einfüllstutzen des Fahrzeugtanks.

Dem ökologischen Grundsatz, wonach ein Austreten gefährdender Stoffe vorteilhafter Weise zu vermeiden ist, anstatt diese zu beseitigen, wird somit insgesamt auf sehr sinnvolle Weise entsprochen.

Tankeinrichtungen nach den erfindungsgemäßen Merkmalen sind geeignet, sämtliche, insbesondere gesetzlich festgeschriebene Anforderungen hinsichtlich des Wasserhaushaltsgesetzes (WHG), der Technischen Regeln für den Umgang mit brennbaren Flüssigkeiten (TRbF) und der Technischen Regeln wassergefährdender Stoffe (TRwS) zu erfüllen. Sie bieten dabei den Vorteil, keine sonstigen bautechnischen Einrichtungen für den Gewässerschutz erforderlich zu machen und eröffnen daher die Möglichkeit des Betankens von Fahrzeugen unabhängig der Standorte von Tankstellen, beispielsweise in Baustellenbereichen. Durch die Verwendung eines geschlossenen Kupplungssystems kann zudem der maximale Förderstrom der Tankeinrichtung ausgenutzt werden. Tankzeiten werden verkürzt, und der Arbeitsbereich für das Bedienpersonal kann sauber gehalten werden von Tankrückständen und Bindemitteln zu deren Behandlung. Neben dem Einsatz von mobilen Tankeinrichtungen ermöglicht die Erfindung insbesondere an ortsfest installierten Tankstellen einen Verzicht auf aufwändige Einrichtungen zum flüssigkeitsdichten Auffangen und Abscheiden ausgetretener Kraftstoffmengen. Tankstellen können daher mit wesentlich geringerem baulichen Aufwand und sehr viel kostengünstiger errichtet werden. Darüber hinaus entfallen Kosten für die Wartung, für Entsorgungsmaßnahmen sowie für das Durchführen von ebenfalls vorgeschriebenen Prüf- und Überwachungshandlungen an diesen Einrichtungen.

Ein Ausführungsbeispiel der Erfindung ist in den Zeichnungen dargestellt und wird im folgenden näher beschrieben.

Es zeigen
- Figur 1: eine schematische Anordnung zum Betanken von Schienenfahrzeugen von einer mobilen Tankeinrichtung und
- Figur 2: eine schematische Anordnung zum Betanken von Schienenfahrzeugen an einer ortsfesten Tankstelle.

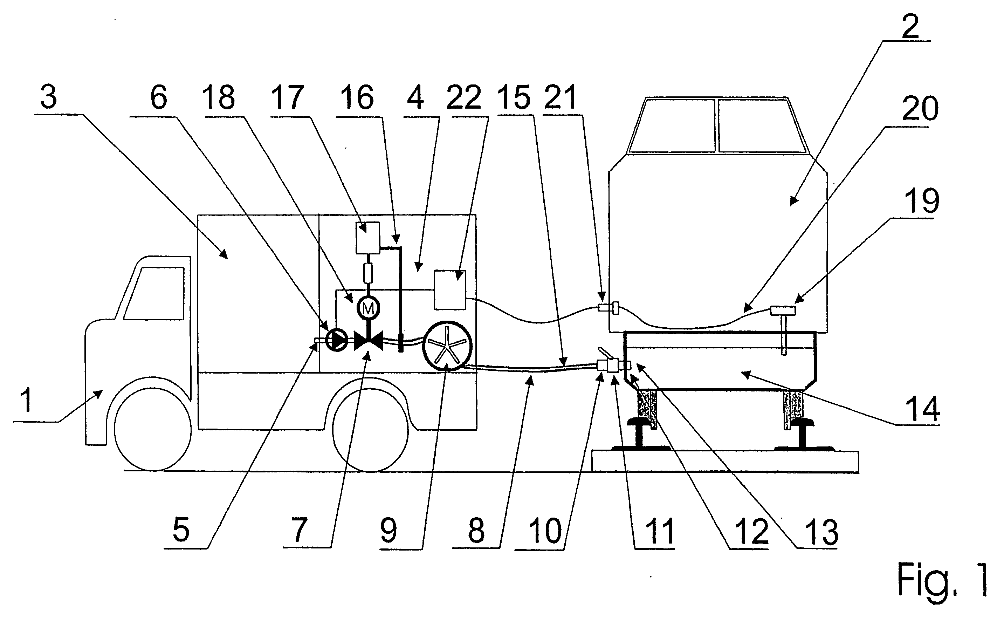

Ein Tankkraftwagen 1 befindet sich gemäß der Figur 1 in unmittelbarer Nähe eines Schienenfahrzeuges 2, und hat die Aufgabe, dieses mit Kraftstoff zu befüllen. Auf dem Tankkraftwagen 1 befindet sich ein Tankaufbau 3 und eine mobile Tankeinrichtung 4. Die mobile Tankeinrichtung 4 ist über eine Rohrleitung 5 mit dem Tankaufbau 3 verbunden. In die Rohrleitung 5 ist außerdem eine Förderpumpe 6 geschaltet. Die Rohrleitung 5 mündet innerhalb der mobilen Tankeinrichtung 4 an ein schnell schließendes Ventil 7. Von diesem führt ausgangsseitig eine doppelwandige Schlauchleitung 8 zu einer Schlauchtrommel 9, auf der die doppelwandige Schlauchleitung 8 für eine Freigabe verschiedener Abrolllängen aufgewickelt ist. Das freie Ende der doppelwandigen Schlauchleitung 8 ist mit einer als Mutterteil ausgeführten Kupplungshälfte 10 einer Vollschlauchtrockenkupplung 11 abgeschlossen. Die als Mutterteil ausgeführte Kupplungshälfte 10 ist mittels eines Renkverschlusses mit einer als Vaterteil ausgeführten Kupplungshälfte 12 verbunden, die sich auf dem Einfüllstutzen 13 eines Fahrzeugtanks 14 befindet. Die als Mutterteil ausgeführte Kupplungshälfte 10 ist kompatibel zu der als Vaterteil ausgeführten Kupplungshälfte 12. Die doppelwandige Schlauchleitung 8 weist einen Zwischenraum 15 auf. Dieser ist über eine Leitung 16 so mit einem Leckanzeigegerät 17 verbunden, dass der Druck innerhalb des Zwischenraumes 15 an das Leckanzeigegerät 17 herangeführt ist. Das Leckanzeigegerät 17 wirkt auf einen motorischen Stellantrieb 18, der das schnell schließende Ventil 7 in einen geschlossenen Zustand überführt. An dem Fahrzeugtank 14 ist außerdem ein Grenzwertgeber 19 angeordnet. An diesem ist eine elektrische Leitung 20 angeschlossen und aus dem Schienenfahrzeug 2 herausgeführt. Dort befindet sich eine Steckverbindung 21, von der aus die elektrische Leitung 20 weitergeführt ist zu einer Abschaltautomatik 22 innerhalb der mobilen Tankeinrichtung 4. Die Abschaltautomatik 22 ist signalseitig verbunden mit der Förderpumpe 6.

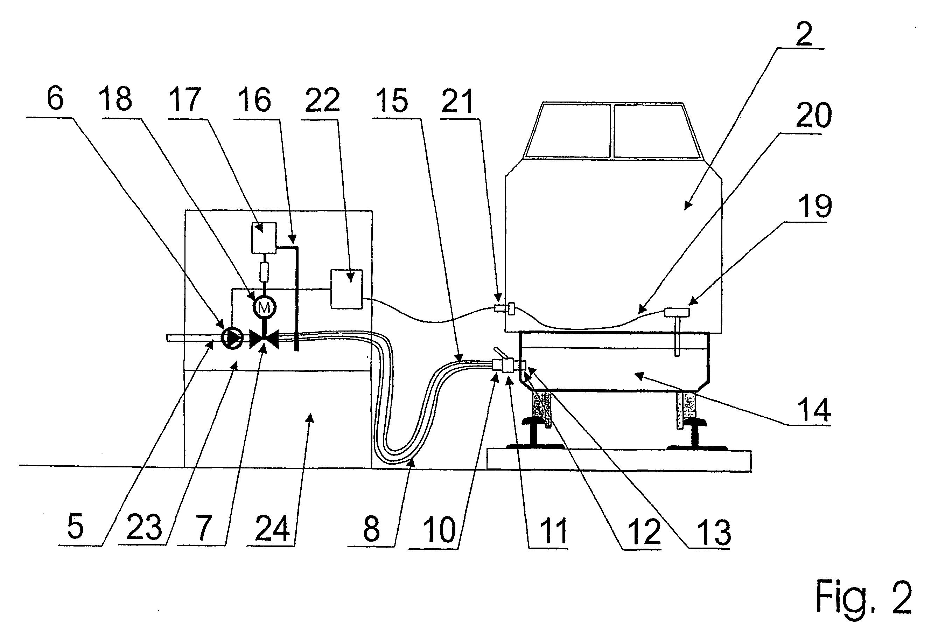

Eine gemäß der Figur 2 dargestellte Anordnung zum Betanken von Schienenfahrzeugen an einer ortsfesten Tankstelle ist weitgehend identisch zu der mobilen Tankeinrichtung nach Figur 1 errichtet. Im folgenden werden daher nur die abweichenden Merkmale erläutert.

Eine ortsfeste Tankeinrichtung 23 ist integraler Bestandteil einer Tankstelle mit einer Zapfsäule 24. Von der Zapfsäule 24 führt die doppelwandige Schlauchleitung 8 direkt zum Fahrzeugtank 14 des Schienenfahrzeuges 2. An der Verbindungsstelle zum Einfüllstutzen 13 des Fahrzeugtanks 14 befindet sich wiederum eine Vollschlauchtrockenkupplung 11 mit den fahrzeugseitig als Vaterteil und tankstellenseitig als Mutterteil ausgeführten Kupplungshälften 12,10. Die doppelwandige Schlauchleitung 8 ist in der ortsfesten Tankeinrichtung 23 an den Ausgang eines schnell schließenden Ventils 7 herangeführt. Der Zwischenraum 15 der doppelwandigen Schlauchleitung 8 ist über eine Leitung 16 mit dem Leckanzeigegerät 17 verbunden.

### Bezugszeichen

- 1: Tankkraftwagen
- 2: Schienenfahrzeug
- 3: Tankaufbau
- 4: mobile Tankeinrichtung
- 5: Rohrleitung
- 6: Förderpumpe
- 7: schnell schließendes Ventil
- 8: doppelwandige Schlauchleitung
- 9: Schlauchtrommel
- 10: als Mutterteil ausgeführten Kupplungshälfte
- 11: Vollschlauchtrockenkupplung
- 12: als Vaterteil ausgeführten Kupplungshälfte
- 13: Einfüllstutzen
- 14: Fahrzeugtank
- 15: Zwischenraum
- 16: Leitung
- 17: Leckanzeigegerät
- 18: Stellantrieb
- 19: Grenzwertgeber
- 20: elektrische Leitung
- 21: Steckverbindung
- 22: Abschaltautomatik
- 23: ortsfeste Tankeinrichtung
- 24: Zapfsäule

## Patentansprüche

1. Anordnung zum Betanken von Fahrzeugen, insbesondere von Schienenfahrzeugen, **dadurch gekennzeichnet, dass** die Tankeinrichtung (4,23) eine Kombination aus einer Vollschlauchtrockenkupplung (11) mit einer doppelwandigen Schlauchleitung (8) aufweist, wobei sich eine Kupplungshälfte (12) der Vollschlauchtrockenkupplung (11) am Einfüllstutzen (13) des Fahrzeugtanks (14) befindet, während eine dazu kompatibel ausgeführte zweite Kupplungshälfte (10) der Vollschlauchtrockenkupplung (11) am Abschluss der doppelwandigen Schlauchleitung (8) angeordnet ist, und die doppelwandige Schlauchleitung (8) eine Verbindung von der Vollschlauchtrockenkupplung (11) bis zum Ausgang eines schnell schließenden Ventils (7) innerhalb der Tankeinrichtung (4,23) herstellt, wobei das schnell schließende Ventil (7) ansteuerungsseitig mit einem Leckanzeigegerät (17) verbunden ist, und das Leckanzeigegerät (17) über eine Leitung (16) mit einem Zwischenraum (15) in der doppelwandigen Schlauchleitung (8) in Verbindung steht und von diesem druckseitig beaufschlagt ist.

2. Anordnung zum Betanken von Fahrzeugen, insbesondere von Schienenfahrzeugen nach Anspruch 1, **dadurch gekennzeichnet, dass** die Tankeinrichtung als ortsfeste Tankeinrichtung (23) integraler Bestandteil einer Tankstelle mit einer oder mehreren Zapfsäulen (24) ist.

3. Anordnung zum Betanken von Fahrzeugen, insbesondere von Schienenfahrzeugen nach Anspruch 1, **dadurch gekennzeichnet, dass** die Tankeinrichtung als mobile Tankeinrichtung (4) auf Tankkraftwagen (1) oder auf Schienenfahrzeugen (2) installiert ist.

## Claims

1. An arrangement for refueling vehicles, particularly rail vehicles, **characterized in that** the refueling device (4, 23) comprises a combination of a solid-hose dry coupling (11) and a double-walled hose assembly (8), wherein one coupling half (12) of the solid-hose dry coupling (11) is situated on the filler pipe (13) of the vehicle tank (14) while a second coupling half (10) of the solid-hose dry coupling (11) is realized complementary to the first coupling half and arranged on the end of the double-walled hose assembly (8), and **in that** the double-walled hose assembly (8) produces a connection between the solid-hose dry coupling (11) and the outlet of a fast-closing valve (7) within the refueling device (4, 23), wherein the control input of the fast-closing valve (7) is connected to a leakage detector (17), and wherein the intermediate space (15) in the double-walled hose assembly (8) is connected to the leakage detector (17) via a line (16) and acts upon its pressure input.

2. The arrangement according to Claim 1 for refueling vehicles, particularly rail vehicles, **characterized in that** the refueling device consists of a stationary refueling device (23) that forms an integral part of a refueling station with one or more fuel pumps (24).

3. The arrangement according to Claim 1 for refueling vehicles, particularly rail vehicles, **characterized in that** the refueling device consists of a mobile refueling device (4) that is installed on commercial refueling vehicles (1) or on rail vehicles (2).

## Revendications

1. Dispositif servant à faire le plein de véhicules, notamment de véhicules ferroviaires, **caractérisé en ce que** le dispositif de ravitaillement (4, 23) comporte une combinaison d'un accouplement à sec à tuyau intégral (11) et d'une conduite tubulaire à double paroi (8), une moitié d'accouplement (12) de l'accouplement à sec à tuyau intégral (11) se trouvant sur la goulotte de remplissage (13) du réservoir du véhicule (14), tandis qu'une deuxième moitié (10) réalisée de manière à être compatible avec celle-ci de l'accouplement à sec à tuyau intégral (11) est disposée au bout de la conduite tubulaire à double paroi (8) et que la conduite tubulaire à double paroi (8) établit une liaison entre l'accouplement à sec à tuyau intégral (11) et la sortie d'une soupape à fermeture rapide (7) à l'intérieur du dispositif de ravitaillement (4, 23), la soupape à fermeture rapide (7) étant reliée au niveau commande à un appareil d'affichage de fuites (17) et l'appareil d'affichage de fuites (17) étant en liaison par l'intermédiaire d'une conduite (16) avec un intervalle (15) de la conduite tubulaire à double paroi (8) et étant sollicitée par celui-ci au niveau pression.

2. Dispositif servant à faire le plein de véhicules, notamment de véhicules ferroviaires, selon la revendication 1, **caractérisé en ce que** le dispositif de ravitaillement sous forme d'un dispositif de ravitaillement fixe (23) fait partie intégrante d'une station service équipée d'une ou plusieurs pompes distributrices (24).

3. Dispositif servant à faire le plein de véhicules, notamment de véhicules ferroviaires, selon la revendication 1, **caractérisé en ce que** le dispositif de ravitaillement sous forme d'un dispositif de ravitaillement mobile (4) est installé sur des camions citernes (1) ou sur des véhicules ferroviaires (2).
